# NEUE EUROPÄISCHE PATENTSCHRIFT

(11) **EP 1 232 337 B2**
(45) Veröffentlichungstag und Bekanntmachung des Hinweises auf die Entscheidung über den Einspruch: **13.06.2007**
(45) Hinweis auf die Patenterteilung: 01.09.2004
(21) Anmeldenummer: 99945704.7
(22) Anmeldetag: 06.04.1999
(51) Int. Cl.: F02D 41/14, F02D 37/02, F02P 5/145, F02D 11/10

(54) **VERFAHREN UND VORRICHTUNG ZUM BETREIBEN EINER ANTRIEBSEINHEIT EINES FAHRZEUGS**
METHOD AND DEVICE FOR THE OPERATION OF A DRIVE UNIT ON A VEHICLE
PROCEDE ET DISPOSITIF POUR ACTIONNER L'UNITE D'ENTRAINEMENT D'UN VEHICULE

(30) Priorität: 02.04.1998 DE 19814743
(43) Veröffentlichungstag der Anmeldung: 21.08.2002
(73) Patentinhaber: ROBERT BOSCH GMBH, 70442 Stuttgart (DE)
(72) Erfinder: FRECH, Eberhard, D-73230 Kirchheim (DE); FROEHLICH, Martin, D-76351 Linkenheim-Hochstetten (DE); GAMER, Lothar, D-76646 Bruchsal (DE); KERNER, Joerg, D-74395 Mundelsheim (DE); MOSER, Alois, Ann Arbor, MI 48103 (US); REUSCHENBACH, Lutz, D-70469 Stuttgart (DE); HESS, Werner, D-70499 Stuttgart (DE)
(86) Internationale Anmeldenummer: PCT/DE1999/001031
(87) Internationale Veröffentlichungsnummer: WO 2001/079676

(56) Entgegenhaltungen:
- WO-A-88/06234
- WO-A-94/24429
- DE-A- 3 919 822
- DE-A- 4 123 347
- DE-T2- 3 872 269
- FR-A- 2 739 660
- US-A- 5 265 570
- US-A- 5 595 159

## Beschreibung

### Stand der Technik

Die Erfindung betrifft ein Verfahren und eine Vorrichtung zum Betreiben einer Antriebseinheit eines Fahrzeugs gemäß den Oberbegriffen der unabhängigen Patentansprüche.

Aus der DE-A 196 19 324 ist eine drehmomentenorientierte Motorsteuerung bekannt, bei der auf der Basis der Stellung eines vom Fahrer betätigbaren Bedienelements und gegebenenfalls wenigstens einer weiteren Betriebsgröße ein Fahrerwunschmoment gebildet wird. Aus diesem wird ein Sollmoment zur Einstellung des Drehmoments der Antriebseinheit abgeleitet, welches im Falle einer Brennkraftmaschine zu einer entsprechenden Beeinflussung der Luftzufuhr, des Zündwinkels und/oder der Kraftstoffzufuhr führt. Zur Komfortverbesserung wird das Sollmoment mit einer vorgegebenen Filterfunktion gefiltert.

Dabei können im dynamischen Betriebszustand Situationen auftreten, in denen das eingestellte Drehmoment und das Fahrerwunschmoment verschieden voneinander sind. Wird also in einer solchen Situation gefiltert und das gefilterte Sollmoment so schnell wie möglich eingestellt, z.B. im Falle einer Brennkraftmaschine durch Steuerung des Zündwinkels, des Luf-/Kraftstoffverhältnis und/oder durch Ausblenden von einzelnen Einspritzungen, entsteht bei Freigabe dieser schnellen Momenteneinstellung ein Sprung im Momentenverlauf, der den Komfort der Steuerung beeinträchtigt.

Es ist Aufgabe der Erfindung, Maßnahmen anzugeben, durch die der Komfort der Momentensteuerung verbessert wird.

Dies wird durch die kennzeichnenden Merkmale der unabhängigen Patentansprüche erreicht.

Die Grundstruktur eines drehmomentenorientierten Steuersystems für eine Brennkraftmaschine ist aus der DE-A 42 39 711 (US-Patent 5,558,178) bekannt.

Aus der EP-A 631 897 ist bekannt, eine Lastwechselsituation zu erkennen und daraufhin eine Begrenzung der Änderungsgeschwindigkeit des Fahrpedalstellungssignals vorzunehmen. Auch hier können die obengenannten Probleme auftreten.

### Vorteile der Erfindung

Durch die Initialisierung eines Sollwertfilters bei Filterungsbeginn mit dem Istwert wird ein sprungförmiger Verlauf des Istwerts wirksam verhindert, der auftritt, wenn der Istwert und der Sollwert sich beim Filterbeginn unterscheiden.

Von besonderem Vorteil ist die Anwendung im Zusammenhang mit einer drehmomentenorientierten Motorsteuerung, bei der ein Fahrerwunschmoment auf der Basis des Betätigungssignals eines Bedienelements gebildet wird, welches zumindest in wenigstens einem Betriebszustand gefiltert wird und abhängig vom gefilterten Wert durch Steuerung wenigstens eines Leistungsparameters der Antriebseinheit eingestellt wird.

Besondere Vorteile ergeben sich, wenn eine schnelle Einstellung des Sollwerts durch z.B. Steuerung des Zündwinkels und/oder der Kraftstoffzumessung erfolgt. In diesem Fall tritt bei Filterbeginn kein Momentensprung auf.

Weitere Vorteile ergeben aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsbeipiele näher erläutert. Figur 1 zeigt ein Übersichtsschaltbild eines Motorsteuersystems mit einer Steuereinheit, die wenigstens einen Mikrocomputer enthält. In Figur 2 ist ein Ablaufdiagramm skizziert, welches ein Programm dieses Mikrocomputers umreißt zur Durchführung der erfindungsgemäßen Filterung. Figur 3 zeigt ein Zeitdiagramm, welches die Wirkungsweise der Vorgehensweise verdeutlicht.

### Beschreibung eines Ausführungsbeispiels

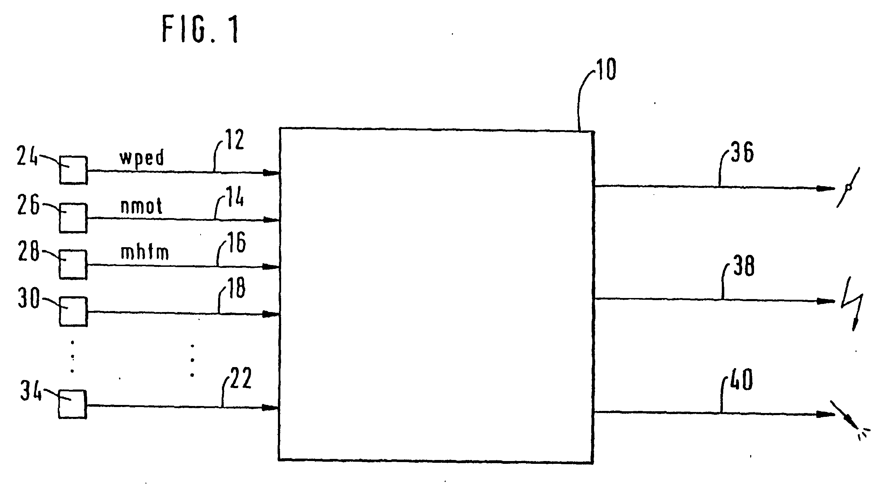

Figur 1 zeigt eine Steuereinheit 10, die wenigstens einen nicht dargestellten Mikrocomputer umfaßt. Die Steuereinheit 10 ist mit Eingangsleitungen 12, 14, 16 sowie 18 bis 22 verbunden, über die Betriebsgrößen zur Durchführung der Steuerung einer nicht dargestellten Antriebseinheit, vorzugsweise einer Brennkraftmaschine, zugeführt werden. Die Eingangsleitung 12 führt von einer entsprechenden Meßeinrichtung 24 ein den Betätigungsgrad wped, z.B. der Stellung eines vom Fahrer betätigbaren Bedienelements, vorzugsweise eines Fahrpedals, zu, die Eingangsleitung 14 von einer entsprechenden Meßeinrichtung 26 ein die Motordrehzahl nmot repräsentierendes Signal und die Eingangsleitung 16 von einer entsprechenden Meßeinrichtung 28 ein die Last (z.B. angesaugte Luftmasse mhfm) repräsentierendes Signal. Ferner sind Eingangsleitungen 18 bis 22 vorgesehen, über die von entsprechenden Meßeinrichtungen 30 bis 34 weitere, Betriebsgrößen repräsentierende Größen, zugeführt werden, die zur Steuerung der Antriebseinheit ausgewertet werden, im Beispiel einer Brennkraftmaschine z.B. die Motortemperatur, die Ansauglufttemperatur, der Ansaugdruck, etc..

Über Ausgangsleitungen 36, 38, 40 ist die Steuereinheiten mit nicht dargestellten Stelleinrichtungen zur Einstellung verschiedener Leistungsparameter der Brennkraftmaschine verbunden. Z.B. steuert die Steuereinheit 10 über die Leitung 36 eine elektrisch betätigbare Drosselklappe zur Steuerung der Luftzufuhr zur Brennkraftmaschine an. Entsprechend wird über die symbolisch dargestellten Leitungen 38 und 40 der Zündwinkel und die Kraftstoffzumessung gesteuert (unter anderem Beeinflussung des Luft/Kraftstoff-Verhältnisses und/oder Ausblendung einzelner Einspritzungen).

Bei einer drehmomentenorientierten Steuerungsstruktur wird aus dem Betätigungsgrad des Bedienelements und gegebenenfalls weiterer Größen ein Fahrerwunschmoment abgeleitet. Dieses wird in bestimmten Betriebssituationen, z.B. bei einem Lastwechsel (Übergang von schiebendem in ziehenden Betrieb der Brennkraftmaschine), bei Rücknahme des Bedienelements (Dashpot) und/oder bei eintretender Kraftstoffabschaltung im Schiebebetrieb bzw. beim Wiedereinsetzen der Kraftstoffzufuhr, gefiltert. Aus dem Fahrerwunschmoment (gefiltert oder nicht) wird gegebenenfalls unter Berückichtigung weiterer Sollmomente (z.B. von einer Antriebsschlupfregelung, etc.) ein Sollmoment abgeleitet, welches durch Steuerung der Luftzufuhr und unter Berücksichtigung eines Istmoment durch Einstellung des Zündwinkels und/oder Beeinflussung der Kraftstoffzumessung eingestellt wird. In einem Ausführungsbeispiel wird ferner zumindest der Zündwinkel durch eine Antiruckelregelung und/oder eine Leerlaufregelung beeinflußt, welche das Istmoment unabhängig vom Fahrerwunschmoment beeinflussen.

Es kann vor allem im dynamischen Betriebszustand vorkommen, daß das Istmoment nicht genau mit dem Fahrerwunschmoment übereinstimmt. Wird in einer solchen Situation das Fahrerwunschmoment gefiltert und dieses gefilterte Moment so schnell wie möglich eingestellt (z.B. über den Zündwinkel und/oder die Kraftstoffzumessung), ergibt sich ein Sprung im Istmoment, der vom Fahrer unangenehm spürbar sein kann. Dies deshalb, weil Fahrerwunschmoment und Istmoment nicht übereinstimmen und der Zündwinkel auf der Basis dieser beiden Größen im Sinne einer Reduzierung der Abweichung eingestellt wird.

Ein solches unerwünschtes Verhalten wird wirksam vermieden, wenn bei Filterbeginn das Filter mit dem Istmoment initialisiert wird. Dies bedeutet, daß zunächst das herrschende Istmoment als Fahrerwunschmoment ausgegeben wird, so daß im ersten Augenblick keine Abweichung zwischen Sollmoment und Istmoment besteht, somit kein Eingriff und kein Momentensprung stattfindet. Im weiteren Verlauf paßt sich die Momentenänderung an den Verlauf des gefilterten Fahrerwunschmoments an.

Als Istmoment wird in einem bevorzugten Ausführungsbeispiel das mit den Eingriffen einer Antiruckelfunktion und/oder einer Leerlaufregelung korrigierte Istmoment verwendet. Es hat sich jedoch gezeigt, daß bei einem Verzicht auf diese Korrekturen sich kein wesentlich schlechteres Verhalten ergibt, so daß in einigen Ausführungen auch auf diese Korrektur beim Istmoment verzichtet werden kann.

Bei der Durchführung dieser Vorgehensweise entsteht bei Filterbeginn ein sprungförmiger Verlauf des Soll- bzw. des Fahrerwunschmoments.

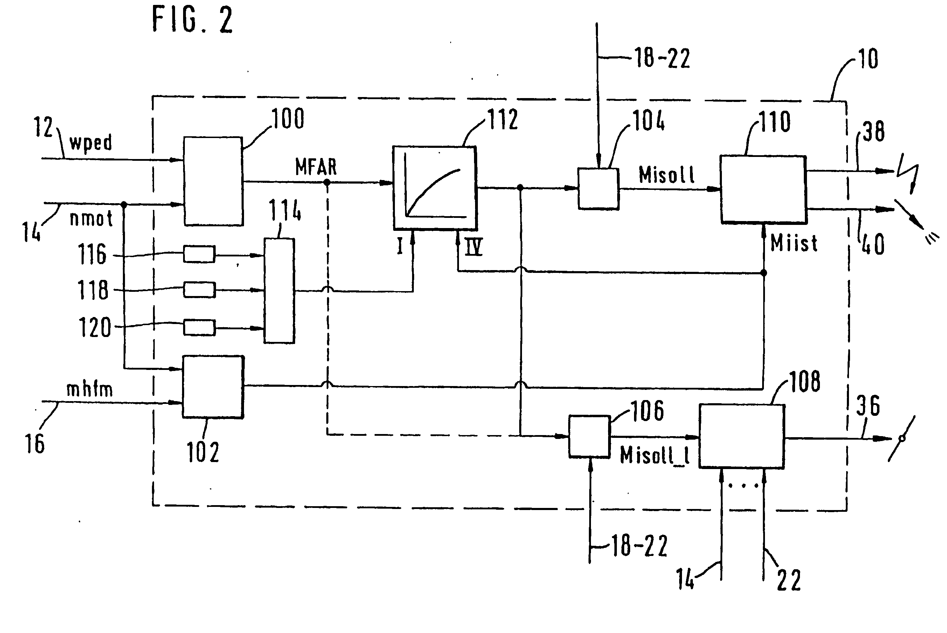

In Figur 2 ist ein Ablaufdiagramm dargestellt, welches ein Programm des Mikrocomputers der Steuereinheit 10 zur Durchführung der beschriebenen Vorgehensweise skizziert. Die einzelnen Elemente stellen dabei Progamme dar, die die beschriebene Funktionen durchführen.

In 100 wird z.B. nach Maßgabe eines Kennfeldes und/oder einer Tabelle und/oder Berechnungßchritten abhängig vom Betätigungsgrad wped und der Motordrehzahl nmot das Fahrerwunschmoment MFAR gebildet. Dieses stellt ein Solldrehmoment der Brennkraftmaschine dar, welches dem Betätigungsgrad und damit dem Fahrerwunsch entspricht. Eine konkrete Vorgehensweise zur Bestimmung des Fahrerwunschmoments ist aus dem eingangs genannten Stand der Technik bekannt. Insbesondere kann das von einer Leerlaufregelung vorgegebene minimale Moment berücksichtigt werden.

Ferner wird in 102 ein Signal, welches ein Istmoment Miist der Brennkraftmaschine repräsentiert, abhängig von der Motordrehzahl nmot und der Motorlast (hier der angesaugten Luftmasse mhfm) gebildet, ebenfalls nach Maßgabe eines Kennfeldes, einer Tabelle oder vorgegebener Berechnungsschritte. Dabei werden wie auch aus dem eingangs genannten Stand der Technik bekannt andere Betriebsgrßßen berückichtigt, besonders die aktuelle Zündwinkeleinstellung sowie gegebenenfalls die aktuelle Einstellung der Kraftstoffzumessung.

Neben dem Fahrerwunschmoment sind in der Regel weitere Sollmomente vorhanden, z.B. ein Reduziermoment einer Antriebsschlupfregelung, ein Sollmoment einer Getriebesteuerung während des Schaltvorgangs, ein Begrenzungsmoment zur Begrenzung der Drehzahl, der Geschwindigkeit, etc. (vgl. Leitungen 18 bis 22). Durch Minimal- und/oder Maximalwertauswahlstufen 104 und 106 wird das jeweils geeignete Moment ausgewählt. Dabei werden in einem bevorzugten Ausführungsbeispiel je ein Sollmoment Misoll_l für die Einstellung der Luftzufuhr (langsamer Eingriff) und wenigstens ein Sollmoment Misoll für die Einstellung von Zündwinkel und/oder Kraftstoffzumessung (schneller Eingriff) ermittelt.

Der Sollwert Misoll_l für die Luftzufuhr wird in 108 unter Berücksichtigung von Betriebsgrößen wie Motordrehzahl, Motorlast, Luftdruck, Ansauglufttemperatur, Stellung der Stelleinrichtung, etc. (vgl. Leitungen 14 bis 22) in ein Ansteuersignal für die Stelleinrichtung umgewandelt, welches über die Ausgangsleitung 38 an das Stelleinrichtung ausgegeben wird. Ein Beispiel für eine Realisierung ist aus dem eingangs genannten Stand der Technik bekannt.

Die Einstellung des Zündwinkels und/oder der Kraftstoffzumessung zur Realisierung des Sollmoments Misoll erfolgt gemäß 110 unter Berücksichtigung des errechneten Istmoments Miist, insbesondere in Abhängigkeit der Abweichung zwischen Sollmoment und Istmoment. Auch für diese Vorgehensweise bietet der eingangs genannte Stand der Technik ein Beispiel, wobei weitere, in Figur 2 nicht dargestellte Größen zur Bestimmung des Zündwinkels und/oder der Kraftstoffzumessung ausgewertet werden. Die entsprechenden Steuersignale werden über 36 bzw. 40 ausgegeben.

Im bevorzugten Ausführungsbeispiel ist ferner eine sogenannte Antiruckelfunktion vorgesehen, die in Abhängigkeit vom Ausmaß von Drehzahlschwingungen ein Steuersignal im Sinne einer Reduzierung der Schwingungen bildet, welches zumindest dem Sollmoment Misoll zur Einstellung des Zündwinkels z.B. additiv aufgeschaltet wird. Die entsprechende Variation des Istmoments durch diese Funktiön wird in einem Ausführungsbeispiel bei der Berechnung des Istmoments Miist in 102 berücksichtigt. Entsprechendes gilt für eine Leerlaufregelung, durch die zumindest das Sollmoment Misoll im Sinne einer Annäherung der Istdrehzahl an eine Solldrehzahl korrigiert wird.

Außerhalb der nachfolgend beschriebenen Betriebssituationen wird das Fahrerwunschmoment mit der vom Fahrer vorgegebenen Dynamik durch Steuerung des Zündwinkels und/oder der Kraftstoffzumessung sowie der Luftzufuhr eingestellt. Dabei kommt es zumindest im dynamischen Betriebszustand vor, daß Fahrerwunschmoment und Istmoment nicht übereinstimmen.

Zur Verbesserung der Fahrbarkeit des Fahrzeugs ist wenigstens ein Filter 112, z.B. ein Tiefpaßfilter, vorgesehen, welches nur in bestimmten Betriebssituationen, während denen bei schneller Veränderung des Fahrerwunschmoments und entsprechend schneller Änderung des Istmoments ein für den Fahrkomfort ungünstiges Betriebsverhalten des Fahrzeugs, z.B. spürbare Triebsstrangschwingungen, auftreten. Durch das Filter können derartige Schwingungen gemildert bzw. unterdrückt werden. Solche Betriebssituationen sind z.B. ein Lastwechsel (Übergang vom schiebenden Betrieb der Brennkraftmaschine in den ziehenden), eine sehr schnelle Rücknahme des Fahrpedals und/oder das Abschalten bzw. Wiedereinsetzen der Kraftstoffzufuhr im Schiebebetrieb. Wird eine derartige Betriebssituation erkannt, wird das Filter aktiviert. Außerhalb dieser Betriebssituationen ist das Filter inaktiv. Der Vollständigkeit halber sei erwähnt, daß je nach Ausführung für jede dieser Situationen ein eigenes Filter vorgesehen ist oder daß für jede dieser Situationen eine eigene Filterkonstante geladen wird. Je nach Ausführung wird in nur einer oder in einer beliebigen Kombination der genannten Betriebssituationen gefiltert.

Wird eine der genannten Betriebssituationen erkannt, wird das Filter über der symbolischen Eingang I aktiviert (initialisiert). Sind in diesem Moment Istmoment und Fahrerwunschmoment verschieden, wird durch die schnelle Einstellung des Sollmoments über den schnelle Eingriff 110 das Istmoment sprungförmig geändert, so daß ein Verhalten auftritt, welches der beabsichtigten Wirkung des Filters entgegengesetzt ist.

Daher wird bei der Aktivierung des Filters das Filter selbst mit dem aktuellen Wert des errechneten Istmoments initialisiert (vgl. symbolischer Eingang IV). Dabei sind bevorzugt im Istmoment die Korrekturen einer Antiruckelfunktion und/oder der Leerlaufregelung eingerechnet. In anderen Ausführungen kann darauf verzichtet werden, ohne daß eine wesentliche Verschlechterung des Verhaltens eintritt.

Das Auftreten einer Betriebssituation, in der eine Filterung vorgenommen wird, wird in 116, 118 und 120 ermittelt. Über eine Oder-Verbindung 114 wird bei Auftreten wenigstens einer Betriebssituation ein entsprechendes Aktivierungssignal an das Filter 112 gesendet. In 116 wird ein Lastwechsel erkannt, wenn z.B. die Nullmomentenkennlinie überschritten wird (Drosselklappenstellung überschreitet einen drehzahlabhängigen Grenzwert, d.h. ein Übergang von schiebenden in den ziehenden Betrieb erkannt wurde. In 118 wird durch Vergleich der negativen Änderung des Betätigungsgrades wped bzw. des Fahrerwunschmoments MFAR mit einem vorgegebenen Grenzwert eine schnelle Rücknahme des Fahrpedals erkannt, was zur Filterung des Fahrerwunschmoments (sogenannter Dashpot) führt. In 120 wird bei gelöstem Fahrpedal mittels eines Vergleichs der Motordrehzahl mit einem Schwellenwert wie bekannt das Abschalten und Wiedereinsetzen der Kraftstoffzufuhr erkannt.

Die tatsächliche Realisierung der Vorgehensweise erfolgt durch Programme, die die beschriebenen Funktionen abbilden.

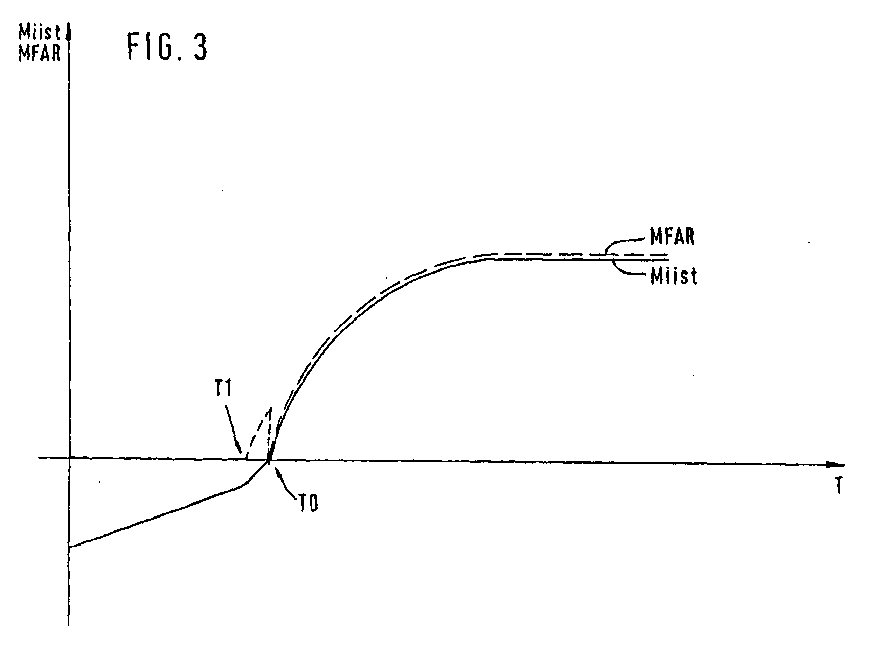

Figur 3 zeigt ein Zeitdiagramm, welches die Wirkungsweise der Vorgehensweise verdeutlicht. Dabei ist das Istmoment Miist (durchgezogene Linie) und das Fahrerwunschmoment MFAR (gestrichelt) aufgetragen. Es ist die Betriebssituation eines Lastwechsels dargestellt.

Zunächst ist das Fahrerwunschmoment auf einem Minimalwert, das Pedal losgelassen. Das Istmoment ist negativ, da der Motor vom Fahrzeug geschleppt wird. Zum Zeitpunkt T1 betätiget der Fahrer das Pedal, das Fahrerwunschmoment steigt an. Zum Zeitpunkt T0 (die Darstellung ist nicht maßstabsgetreu) wird der Lastwechsel erkannt. Dies führt dazu, daß das Filter initialisiert wird mit dem aktuellen Wert des Istmoments (hier 0). Danach folgt ein gefilterter Verlauf des Fahrerwunsch- und des Istmoments. Zum Zeitpunkt T0 ergibt sich durch die beschriebene Vorgehensweise ein sprungförmiger Verlauf des Fahrerwunschmoments, während der Verlauf des Istmoments ohne Sprung ist.

Die beschriebene Vorgehensweise wird nur in Verbindung mit der Filterung eines Fahrerwunschsollmoments eingesetzt. Eine entsprechende Vorgehensweise wird in Verbindung mit einem Fahrpedalbetätigungssignal (Sollwert für die Drosselklappenstellung), einem Leistungssollwert, einem Sollastwert, einem Solldrehzahlwert, etc; eingesetzt, wobei die Initialisierung mit dem entsprechenden Istwert Drosselklappenstellung, Istleistung, etc. vorgenommen wird.

## Patentansprüche

1. Verfahren zum Betreiben einer Antriebseinheit eines Fahrzeugs, wobei ein Sollwert vorgegeben wird und ein dem Sollwert entsprechender Istwert ermittelt wird, wobei der Sollwert in wenigstens einer Betriebssituation gefiltert wird, **dadurch gekennzeichnet, dass** eine Initialisierung der Filterung bei Beginn der Filterung mit dem ermittelten Istwert erfolgt und dass die wenigstens eine Betriebssituation ein Lastwechsel, eine schnelle Rücknahme des Fahrpedals und/oder das Abschalten oder Wiedereinsetzen der Kraftstoffzufuhr beim Schiebebetrieb ist, wobei der Beginn der Filterung bei Erkennen der wenigstens einen Betriebssituation ausgelöst wird.

2. Verfahren nach Anspruch 1, **dadurch gekennzeichnet, dass** der Sollwert ein Fahrerwunschsollmoment ist, welches wenigstens durch Steuerung des Zündwinkels und/oder der Kraftstoffzumessung eingestellt wird.

3. Verfahren nach einem der vorhergehenden Ansprüche, **dadurch gekennzeichnet, dass** der Istwert ein Istmoment ist.

4. Verfahren nach einem der vorhergehenden Ansprüche, **dadurch gekennzeichnet, dass** die Filterung durch wenigstens ein Filter, vorzugsweise ein Tiefpassfilter, vorgenommen wird.

5. Verfahren nach einem der vorhergehenden Ansprüche, **dadurch gekennzeichnet, dass** bei der Initialisierung der Filterung ein Sprung im Sollwert auftritt, wenn der Sollwert nicht exakt mit dem Istwert übereinstimmt.

6. Verfahren nach einem der vorhergehenden Ansprüche, **dadurch gekennzeichnet, dass** beim Istwert Korrekturen durch Funktionen wie eine Antiruckelfunktion und/oder eine Leerlaufregelung berücksichtigt sind.

7. Verfahren nach einem der vorhergehenden Ansprüche, **dadurch gekennzeichnet, dass** außerhalb der wenigstens einen Betriebssituation keine Filterung des Sollwert stattfindet.

8. Vorrichtung zum Betreiben einer Antriebseinheit eines Fahrzeugs, mit einer Steuereinheit (10), die einen Sollwert zur Steuerung der Antriebseinheit vorgibt und die ein dem Sollwert entsprechenden Istwert ermittelt, mit einem Filter (112) als Teil der Steuereinheit (10), durch welches der Sollwert in wenigstens einer Betriebssituation gefiltert wird, **dadurch gekennzeichnet, dass** die Steuereinheit (10) Mittel aufweist, welche bei Vorliegen dieser wenigstens einen Betriebssituation das Filter (112) mit dem ermittelten Istwert initialisieren und dass die wenigstens eine Betriebssituation ein Lastwechsel, eine schnelle Rücknahme des Fahrpedals und/oder das Abschalten oder Wiedereinsetzen der Kraftstoffzufuhr beim Schiebebetrieb ist, wobei ein Auslösen des Beginns der Filterung bei Erkennen der wenigstens einen Betriebssituation erfolgt.

## Claims

1. Method for operating a drive unit of a vehicle, a set point value being predefined and an actual value which corresponds to the set point value being determined, the set point value being filtered in at least one operating situation, **characterized in that** when the filtering starts, the filtering is initialized with the actual value which is determined and **in that** the at least one operating situation is a load change, a rapid retraction of the accelerator pedal and/or the switching off or restarting of the fuel supply in the overrun mode, the start of the filtering being triggered when the at least one operating situation is detected.

2. Method according to Claim 1, **characterized in that** the set point value is a driver's desired set point torque which is set at least by controlling the ignition angle and/or the metering of fuel.

3. Method according to one of the preceding claims, **characterized in that** the actual value is an actual torque.

4. Method according to one of the preceding claims, **characterized in that** the filtering is performed by at least one filter, preferably a low-pass filter.

5. Method according to one of the preceding claims, **characterized in that**, during the initialization of the filtering, a jump in the set point value occurs if the set point value does not correspond precisely to the actual value.

6. Method according to one of the preceding claims, **characterized in that**, at the actual value, corrections are taken into account by means of functions such as an anti-jolting function and/or an idling regulator.

7. Method according to one of the preceding claims, **characterized in that** no filtering of the set point value takes place outside the at least one operating situation.

8. Device for operating a drive unit of a vehicle, having a control unit (10), which predefines a set point value for controlling the drive unit and which determines an actual value which corresponds to the set point value, having a filter (112) as part of the control unit (10), by means of which filter (112) the set point value is filtered in at least one operating situation, **characterized in that** the control unit (10) has means which, when this at least one operating situation is present, initialize the filter (112) with the actual value which is determined, and **in that** the at least one operating situation is a load change, a rapid retraction of the accelerator pedal and/or the switching off or restarting of the fuel supply in the overrun mode, the start of the filtering being triggered when the at least one operating situation is detected.

## Revendications

1. Procédé pour actionner une unité d'entraînement d'un véhicule, en prédéterminant une valeur de consigne et en calculant une valeur réelle correspondant à la valeur de consigne que l'on filtre dans au moins une situation de fonctionnement,
**caractérisé en ce qu'**
une initialisation du filtrage a lieu au début du filtrage avec la valeur réelle calculée, et l'au moins une situation de fonctionnement est un changement de change, un retour rapide de la pédale d'accélération et/ou la coupure ou la reprise d'alimentation en carburant en régime de poussée le début du filtrage étant déclenché dès que la situation de fonctionnement est reconnue.

2. Procédé selon la revendication 1,
**caractérisé en ce que**
la valeur de consigne est un couple de consigne souhaité par le conducteur, et réglé au moins par la commande de l'angle d'allumage et/ ou de la distribution du carburant.

3. Procédé selon l'une des revendications précédentes,
**caractérisé en ce que**
la valeur réelle est un couple réel.

4. Procédé selon l'une des revendications précédentes,
**caractérisé en ce que**
le filtrage est réalisé par au moins un filtre, de préférence un filtre passe-bas.

5. Procédé selon l'une des revendications précédentes,
**caractérisé en ce qu'**
un saut se produit dans la valeur de consigne lors de l'initialisation du filtrage lorsque de consigne ne correspond pas exactement à la valeur réelle.

6. Procédé selon l'une des revendications précédentes,
**caractérisé en ce que**
des corrections sont prises en compte pour une valeur réelle par l'intermédiaire de fonctions telles qu'une fonction anti-secousses et/ou une régulation de ralenti.

7. Procédé selon l'une des revendications précédentes,
**caractérisé en ce qu'**
aucun filtrage de la valeur consigne n'a lieu en dehors de l'au moins une situation de fonctionnement.

8. Dispositif pour actionner une unité d'entraînement d'un véhicule, avec une unité de commande (10) qui prédéfinit une valeur de consigne pour commander l'unité d'entraînement et calcule une valeur réelle correspondant à la valeur de consigne, avec un filtre (112) faisant partie de l'unité de commande (10) permettant de filtrer la valeur de consigne dans au moins une situation de fonctionnement,
**caractérisé en ce que**
l'unité de commande (10) présente des moyens qui initialisent le filtre (112) avec la valeur réelle calculée en cas de présence de cette au moins une situation de fonctionnement, et l'au moins une situation de fonctionnement est un changement de charge, un retour rapide de la pédale d'accélération et/ou la coupure ou la reprise d'alimentation en carburant en régime de poussée le début du filtrage étant déclenché dès que la situation de fonctionnement est reconnue.
